# EUROPÄISCHE PATENTSCHRIFT

(11) **EP 3 041 969 B1**
(45) Veröffentlichungstag und Bekanntmachung des Hinweises auf die Patenterteilung: **06.05.2020**
(21) Anmeldenummer: 14758278.7
(22) Anmeldetag: 24.07.2014
(51) Int. Cl.: C23C 2/06, C23C 2/28, C23C 2/40, C21D 1/18, C21D 8/02, C21D 9/46, C21D 9/52, C22C 18/00, C22C 18/04, C21D 1/673

(54) **ZINKBASIERTE KORROSIONSSCHUTZBESCHICHTUNG FÜR STAHLBLECHE ZUR HERSTELLUNG EINES BAUTEILS BEI ERHÖHTER TEMPERATUR DURCH PRESSHÄRTEN**
ZINC BASED CORROSION PROTECTION COATING FOR STEEL SHEETS FOR MANUFACTURING AN ARTICLE AT ELEVATED TEMPERATURE BY PRESS HARDENING
REVÊTEMENT DE PROTECTION CONTRE LA CORROSION À BASE DE ZINC AUX TÔLES D'ACIER POUR LA FABRICATION D'UN ARTICLE À CHAUD PAR TREMPE SOUS PRESSE

(30) Priorität: 02.09.2013 DE 102013015032
(43) Veröffentlichungstag der Anmeldung: 13.07.2016
(73) Patentinhaber: Salzgitter Flachstahl GmbH, 38239 Salzgitter (DE)
(72) Erfinder: LUTHER, Friedrich, 30989 Gehrden (DE); DEBEAUX, Marc, 38100 Braunschweig (DE)
(74) Vertreter: Meissner, Peter E.
(86) Internationale Anmeldenummer: PCT/DE2014/000393
(87) Internationale Veröffentlichungsnummer: WO 2015/027972

(56) Entgegenhaltungen:
- WO-A1-2009/080292
- JP-A- H0 368 749
- JP-A- H05 117 830
- JP-A- S56 108 845
- US-A1- 2006 141 280
- AUTENGRUBER R ET AL: "Surface and Coating Analysis of Press-Hardened Hot-Dip Galvanized Steel Sheet", STEEL RESEARCH INTERNATIONAL, Bd. 83, Nr. 11, 8. Oktober 2012 (2012-10-08), Seiten 1005-1011, XP055149871, Wiley-VCH Verlag [DE] ISSN: 1611-3683, DOI: 10.1002/srin.201200068
- LYNCH S P: "Failures of Structures and Components by Metal-Induced Embrittlement", JOURNAL OF FAILURE ANALYSIS AND PREVENTION, vol. 8, no. 3, 26 March 2008 (2008-03-26), pages 259-274, XP055592147, Springer Nature Switzerland AG [CH] ISSN: 1547-7029, DOI: 10.1007/s11668-008-9124-y

## Beschreibung

Die Erfindung betrifft eine zinkbasierte Korrosionsschutzbeschichtung für Stahlbleche, die in einem Warmumformprozess gehärtet werden mit den Merkmalen des Patentanspruches 1.

Es ist bekannt, dass warmumgeformte Stahlbleche insbesondere im Automobilbau immer häufiger Verwendung finden. Durch den auch als Presshärten bezeichneten Prozess können hochfeste Bauteile erzeugt werden, die vorwiegend im Bereich der Karosserie eingesetzt werden. Das Presshärten kann grundsätzlich mittels zwei verschiedener Verfahrensvarianten durchgeführt werden, nämlich mittels des direkten oder indirekten Verfahrens.

Beim direkten Verfahren wird eine Stahlblechplatine über die sogenannte Austenitisierungstemperatur aufgeheizt, anschließend wird die so erhitzte Platine in ein Formwerkzeug überführt und in einem einstufigen Umformschritt zum fertigen Bauteil umgeformt und hierbei durch das gekühlte Formwerkzeug gleichzeitig mit einer Geschwindigkeit, die über der kritischen Härtegeschwindigkeit des Stahls liegt, abgekühlt, so dass ein gehärtetes Bauteil erzeugt wird.

Beim indirekten Verfahren wird zunächst gegebenenfalls in einem mehrstufigen Umformprozess das Bauteil fast vollständig fertig umgeformt. Dieses umgeformte Bauteil wird anschließend ebenfalls auf eine Temperatur über der Austenitisierungstemperatur erhitzt und anschließend in ein Formwerkzeug überführt und eingelegt, welches schon die Abmessungen des Bauteils bzw. die Endabmessungen des Bauteils besitzt. Nach dem Schließen des insbesondere gekühlten Werkzeuges wird das vorgeformte Bauteil lediglich in diesem Werkzeug mit einer Geschwindigkeit über der kritischen Härtegeschwindigkeit abgekühlt und dadurch gehärtet.

Bekannte warmumformbare Stähle für diesen Einsatzbereich sind z. B. der Mangan-Bor-Stahl "22MnB5" und neuerdings auch luftvergütbare Stähle gemäß DE 10 2010 024 664 A1.

Neben unbeschichteten Stahlblechen werden vermehrt auch Stahlbleche mit einer Korrosionsschutzbeschichtung von der Automobilindustrie für das Presshärten gefordert und eingesetzt. Die Vorteile liegen hier neben der erhöhten Korrosionsbeständigkeit des fertigen Bauteils darin, dass die Platinen oder Bauteile im Ofen nicht verzundern, wodurch der Verschleiß der Pressenwerkzeuge durch abgeplatzten Zunder reduziert wird und die Bauteile vor der Weiterverarbeitung oft nicht aufwendig gestrahlt werden müssen.

Zum Einsatz beim Presshärten kommen derzeit durch Schmelztauchen aufgebrachte Beschichtungen aus Aluminium-Silizium (AS), Zink-Aluminium (Z), Zink-Aluminium-Eisen (ZF/ Galvannealed) sowie elektrolytisch abgeschiedene Beschichtungen aus Zink-Nickel. Diese Korrosionsschutzbeschichtungen werden üblicherweise in kontinuierlichen Durchlaufverfahren auf das Warm- oder Kaltband aufgebracht.

Der Vorteil von zinkbasierten Korrosionsschutzbeschichtungen liegt darin, dass diese nicht nur eine Barrierewirkung wie die aluminiumbasierten Beschichtungen aufweisen, sondern zusätzlich einen aktiven kathodischen Korrosionsschutz für das Bauteil bieten können.

Das Presshärten von Stahlblechplatinen mit zinkbasierten Beschichtungen ist aus der DE 601 19 826 T2 bekannt. Hier wird eine zuvor oberhalb der Austenitisierungstemperatur auf 800 - 1200 °C erwärmte und ggf. mit einem metallischen Beschichtung aus Zink oder auf Basis von Zink versehene Blechplatine in einem fallweise gekühlten Werkzeug durch Warmumformung zu einem Bauteil umgeformt, wobei während des Umformens durch schnellen Wärmeentzug das Blech bzw. Bauteil im Umformwerkzeug eine Abschreckhärtung (Presshärtung) erfährt und durch das entstehende martensitische Härtegefüge die geforderten Festigkeitseigenschaften erreicht.

Zinkbasierte Systeme haben allerdings auch einen Nachteil. So ist insbesondere beim direkten Presshärten von zinkbasierten Korrosionsschutzbeschichtungen bekannt, dass während des Umformschritts im oberflächennahen Bereich Makrorisse (>100 µm) im Stahl auftreten können, die teilweise sogar durch den Blechquerschnitt reichen. Auch kleinere Mikrorisse können bereits die Dauerfestigkeit des Bauteils senken und dadurch deren Einsatz verhindern.

Eine Ursache für das Auftreten von Rissen ist die Spannungskorrosion durch flüssige Zinkphasen, die auch als Flüssigmetallversprödung, Liquid Metal Assisted Cracking (LMAC) oder Liquid Metal Embrittlement (LME) bezeichnet wird. Hierbei werden die Austenitkorngrenzen des Stahls durch flüssige Zinkphasen infiltriert und geschwächt, was insbesondere in Bereichen mit hohen Spannungen bzw. Umformgraden zu tiefen Rissen führen kann.

Eine Möglichkeit dieser Problematik zu begegnen, ist der Einsatz des indirekten Presshärtens bei zinkbasierten Beschichtungen, da hier der eigentliche Umformschritt vor der Härtung bei Umgebungstemperaturen durchgeführt wird. Zwar können bei der Härtung und Restformgebung im Werkzeug ebenfalls Risse auftreten, die Tiefe der Risse ist jedoch im Vergleich zu den Rissen bei der direkten Prozessierung deutlich geringer und werden, da sie die erlaubten Risstiefen in der Regel nicht überschreiten, als unschädlich angesehen.

Das indirekte Verfahren ist jedoch erheblich aufwendiger, da zum einen ein zusätzlicher Arbeitsschritt nötig ist (Kaltumformung) und zum anderen spezielle Öfen zur Erwärmung verwendet werden müssen, in denen die Bauteile statt Platinen vor der Härtung erwärmt werden können.

Eine weitere Möglichkeit ist das in der DE10 2010 056 265 B3 beschriebene Verfahren zum Herstellen eines gehärteten Stahlbauteiles mit einer Beschichtung aus Zink oder einer Zinklegierung, wobei die Platine abhängig von der Dicke der Zinkschicht oder der Dicke der Zinklegierungsschicht vor dem Umformen so lange auf einer Temperatur von über 782°C gehalten wird, dass sich zwischen dem Stahl und der Beschichtung aus Zink oder einer Zinklegierung eine Sperrschicht aus Zinkferrit ausbildet und die sich ausbildende Zinkferritschicht flüssiges Zink aufnimmt und so dick ausgebildet wird, dass beim Umformen keine flüssigen Zinkphasen mit dem Stahl reagieren.

Unter Zinkferrit wird hier ein Eisen-Zink-Mischkristall verstanden, in dem die Zinkatome substitutionell gelöst im Eisenkristallgitter vorliegen. Durch den geringen Zinkgehalt liegt der Schmelzpunkt des Zinkferrits oberhalb der Umformtemperatur. In der Praxis hat sich jedoch gezeigt, dass bei den nach diesem Verfahren hergestellten Bauteilen, aufgrund des notwendigen hohen Eisenanteils in der Legierungsschicht, der kathodische Korrosionsschutz am fertigen Bauteil nur noch äußerst gering ist. Das Prozessfenster für die Erwärmung ist darüber hinaus sehr klein, da bei zu kurzen Erwärmungszeiten Flüssigmetallversprödung auftreten kann und bei zu langen Erwärmungszeiten kein kathodischer Korrosionsschutz mehr vorhanden ist.

Eine weitere Möglichkeit ist das in der EP 2 414 562 B1 beschriebene Verfahren zum Herstellen eines gehärteten Stahlbauteils, wobei auf dem Stahlflachprodukt eine einphasige aus [gamma-]ZnNi-Phase bestehender Zink-Nickel-Legierungsschicht elektrolytisch abgeschieden wird, welche neben Zink und unvermeidbaren Verunreinigungen 7 bis 15 Gew. % Nickel enthält, eine aus dem Stahlflachprodukt gebildete Platine auf eine mindestens 800°C betragende Platinentemperatur erwärmt wird und anschließend in einem Formwerkzeug geformt und mit einer zur Ausbildung des Vergütungs- oder Härtegefüge ausreichenden Geschwindigkeit abgekühlt wird.

Durch den Nickelgehalt wird der Schmelzpunkt der Legierungsschicht derart erhöht, dass bei der Warmumformung keine flüssige Zinkphase und somit keine Flüssigmetallversprödung auftreten kann. Allerdings hat das Verfahren den Nachteil, dass aufgrund des Nickelgehalts Gesundheitsgefahr bei der Verarbeitung besteht, wenn Nickelstäube oder Nickeldämpfe eingeatmet werden.

JP H05-117830 A offenbart eine Badzusammensetzung auf Zinkbasis für eine Heißtauchbeschichtung. Das Bad enthält 0,01 - 1 Masse% Mn, 3 - 10 Masse% Al, unvermeidbare Verunreinigungen, Rest Zink.

Aus der Veröffentlichung AUTENGRUBER R ET AL: "Surface and Coating Analysis of Press-Hardened Hot-Dip Galvanized Steel Sheet", STEEL RESEARCH INTERNATIONAL, 83 (11), 8. Oktober 2012, Seiten 1005 - 1011, XP055149871, ISSN: 1611-3683, DOI: 10.1002/srin.201200068 ist ein Verfahren bekannt, bei dem ein Stahlblech der Sorte 22MnB5 durch Schmelztauchen mit einer 10 µm starken Schicht, bestehend aus Zn mit 0,5 Masse% Al, überzogen und anschließend pressgehärtet wird. Durch die mit der Presshärtung einhergehende Austenitisierung kommt es in der Schicht zur Bildung von Legierungen und intermetallischen Phasen mit Eisen (Zn-gesättigtes α-Fe und ┌-FeZn), wobei die Schichtdicke auf 20 µm anwächst. Aus der Veröffentlichung geht ferner hervor, dass durch den Erwärmungsprozess beim Presshärten, bei dem Temperaturen bis 700 °C erreicht werden, Al an die Oberfläche diffundiert.

Aufgabe der Erfindung ist es, eine metallische Beschichtung für direkt pressformgehärtete Bauteile aus Stahl anzugeben, die Flüssigmetallversprödung bei der Warmumformung wirksam verhindert und zudem einen hohen kathodischen Korrosionsschutz des umgeformten Bauteils sicherstellt, ohne dass Elemente enthalten sind, die im Hinblick auf die Herstellung und Verarbeitung als potentiell gesundheitsschädlich angesehen werden.

Nach der Lehre der Erfindung wird diese Aufgabe durch eine Beschichtung für ein durch Pressformhärtung umzuformendes Blech oder Band realisiert, welche mindestens aus 75 Gew.% Zink, 0,5 bis 5,0 Gew.% Mangan und 0,1 bis 2,0 Gew.% Aluminium besteht. Das erfindungsgemäße Verfahren ist in Anspruch 1 definiert. Vorteilhafte Ausführungsformen des Verfahrens sind in den Ansprüchen 2 bis 4 definiert. Ein entsprechendes Bauteil und eine Verwendung der Korrosionsschutzbeschichtung sind jeweils in den Ansprüchen 5 und 6 definiert. Bevorzugte Verwendungen finden sich in Anspruch 7.

Überraschend hat sich bei Versuchen gezeigt, dass Platinen mit einer Beschichtung, die neben Zink und Aluminium zusätzlich eine ausreichende Menge an Mangan enthält, auch ohne eine dicke Zinkferritschicht, d.h. nach sehr kurzen Erwärmungszeiten, direkt pressformgehärtet werden können, ohne dass Flüssigmetallversprödung auftritt. Die Wirkungsweise resultiert dabei nicht aus einer Schmelzpunkterhöhung der Beschichtung über die Umformtemperatur sondern Untersuchungen zur Folge aus dem Vorhandensein von Mangan im Bereich der Grenzfläche zwischen Stahl und Beschichtung. Hierdurch tritt offensichtlich auch beim Vorhandensein von flüssigen Zinkphasen während des Umformens keine Flüssigmetallversprödung auf.

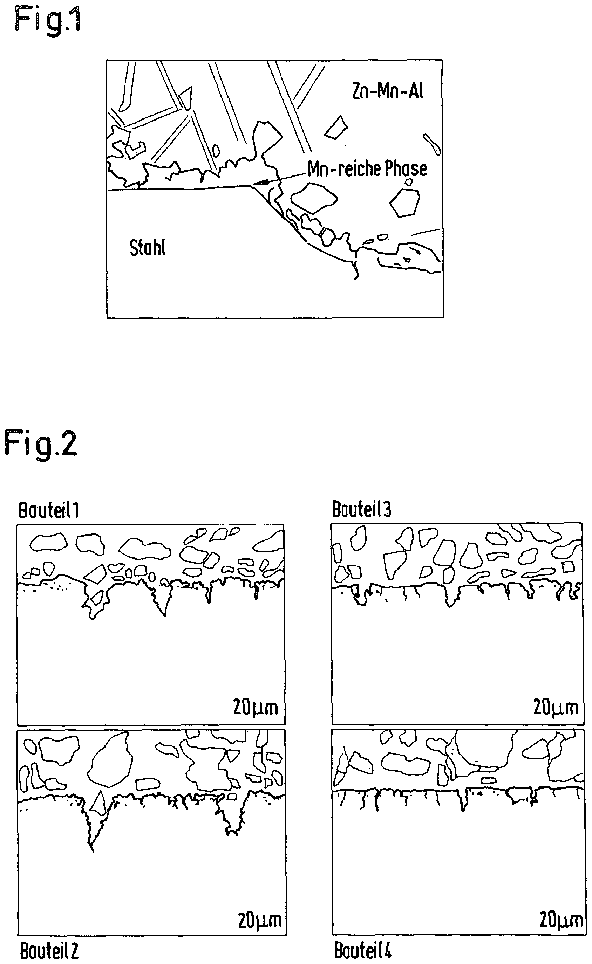

**Figur 1** zeigt eine rasterlektronenmikroskopische Aufnahme des Querschliffs einer erfindungsgemäßen Zn-Mn-Al-Korrosionsschutzschicht im Übergangsbereich Stahl-Beschichtung. Zwar ist der Mechanismus der versprödungshemmenden Wirkung des Mangananteils in der Beschichtung derzeit noch nicht klar, im Ausgangszustand vor der Warmumformung sind jedoch manganhaltige Phasen in der Beschichtung an der Grenzfläche zum Stahl nachweisbar, die sich anstelle der ansonsten beim Schmelztauchverzinken bekannten Fe₂Al₅Znₓ-Hemmschichten und/oder Zink-Eisen-Phasen ausbilden.

Da Flüssigmetallversprödung bei einem hinreichend hohen Mangananteil nicht auftritt, ist keine minimale Glühzeit zur Ausbildung einer dicken Zinkferritschicht vor der direkten Warmumformung notwendig bzw. nur die Zeit bis zum Erreichen der erforderlichen Umformtemperatur. In **Figur 2** sind vergleichend die 90° Biegeschultern von direkt warmumgeformten Bauteilen nach sehr kurzen Erwärmungszeiten (180 Sekunden) auf 900°C dargestellt. Während bei den Referenzproben (22MnB5+Z140) die Risse bis tief in das Grundmaterial reichen, enden die Risse beim 22MnB5 mit einer erfindungsgemäßen Beschichtung am Übergang von der Legierungsschicht zum Stahlsubstrat.

Durch die kurzen Erwärmungszeiten kann somit ein hoher Zinkanteil in der Legierungsschicht des fertigen Bauteils bewahrt werden, wodurch sich der kathodische Korrosionsschutz signifikant verbessert. Mit steigendem Mangananteil in der Beschichtung erhöht sich auch der Schmelzpunkt, was den Prozess der kontinuierlichen Schmelztauchbeschichtung aufwendiger macht oder eine praktikable Umsetzung ganz verhindert. Darüber hinaus sinkt der für den kathodischen Korrosionsschutz entscheidende Zinkanteil. Zur Sicherstellung eines ausreichenden Korrosionsschutzes in Kombination mit einer die Flüssigmetallversprödung hemmenden Wirkung ist aus diesem Grund vorgesehen, dass der Anteil an Zink in der Beschichtung mindestens 75 Gew.% und der Anteil an Mangan in der Beschichtung 0,5 bis 15 Gew.% beträgt. Mit steigendem Mangangehalt erhöht sich allerdings der Schmelzpunkt der zinkbasierten Korrosionsschutzbeschichtung und dadurch auch die notwendige Schmelzbadtemperatur, was den technischen Aufwand und die Energiekosten erhöht. Aus diesem Grund ist es erforderlich, dass der Mangangehalt 0,5 bis 5,0 Gew.% und weiter bevorzugt 0,5 bis 3,0 Gew. % beträgt. Die angegebenen Gehalte müssen dabei als gemittelter Wert betrachtet werden, da sich insbesondere an der Grenzfläche zum Stahlsubstrat manganreiche Phasen ausbilden.

Die Zugabe von Aluminium in Gehalten von 0,1 bis 10 Gew.% ist notwendig, damit sich im Zuge der Erwärmung auf Austenitisierungstemperatur auf der Oberfläche der Beschichtung eine Aluminiumoxidschicht ausbildet, die den Überzug - insbesondere den Zinkanteil - vor dem Verdampfen oder vor einer massiven Oxidation schützt. Auch Aluminium erhöht den Schmelzpunkt der zinkbasierten Korrosionsschutzbeschichtung und dadurch auch die notwendige Schmelzbadtemperatur. Darüber hinaus verringert sich mit steigendem Aluminiumgehalt die Standzeit der Badeinbauten in der Schmelze. Aus diesen Gründen ist es erforderlich, dass der Aluminiumgehalt bevorzugt 0,1 bis 2,0 Gew.% und weiter bevorzugt 0,1 bis 1,0 Gew.% beträgt.

Bei Bedarf kann bereits während des kontinuierlichen Schmelztauchprozesses die Beschichtung durch eine unmittelbare Erwärmung nach Verlassen des Schmelzbades in eine Zink-Eisen-Mangan-Aluminium-Legierungsschicht umgewandelt werden (Galvannealing-Behandlung). Dies könnte Vorteilhaft für eine denkbare Schnellerwärmung der Platinen vor der Warmumformung z.B. durch Induktion sein, da hierdurch die Verdampfungsgefahr der Legierungsschicht durch Erhöhung des Eisenanteils reduziert wird.

Die Dicke der Beschichtung kann je nach Anforderung an den Korrosionsschutz zwischen 1 µm und 25 µm betragen, wobei auch größere Dicken möglich sind.

Das erfindungsgemäße Verfahren eignet sich gleichermaßen zur Beschichtung von warm- oder kaltgewalzten Stahlflachprodukten.

Neben dem Einsatz für pressformgehärtete Bauteile für die Automobilindustrie kann die erfindungsgemäße Korrosionsschutzbeschichtung auch vorteilhaft für Stahlprodukte in anderen Industriebereichen eingesetzt werden, die allgemein bei der Weiterverarbeitung durch Umformung und/oder Vergüten einer Temperaturbeanspruchung ausgesetzt sind und im fertigen Bauteil einen ausreichenden Korrosionsschutz aufweisen sollen. Dies können z.B. für den Landmaschinenbau zu Pflugscharen umgeformte und anschließend gehärtete Bleche, vergütete Grobbleche oder Walzprofile für den Baubereich oder Maschinenbau sein.

Die wesentlichen Vorteile der Erfindung lassen sich wie folgt zusammenfassen:
- Der Eisengehalt der Legierungsschicht am fertigen Bauteil kann deutlich geringer und der Zinkgehalt somit deutlich höher ausfallen als bei Bauteilen mit den bekannten zinkbasierten Schmelztauchbeschichtungen, wodurch ein deutlich verbesserter kathodischer Korrosionsschutz gewährleistet wird.
- Das Prozessfenster bei der Warmumformung ist im Vergleich zu den bekannten zinkbasierten Schmelztauchbeschichtungen größer, da keine minimalen Ofenzeiten notwendig sind bzw. nur die Zeit bis zum Erreichen der Umformtemperatur.
- Bei der Verarbeitung können im Vergleich zu den elektrolytischen Zink-Nickel-Beschichtungen keine gesundheitsgefährdenden Nickel-Stäube und/oder Dämpfe entstehen. Bei der Herstellung sind keine nickelhaltigen Medien notwendig.

## Patentansprüche

1. Verfahren zum Herstellen einer zinkbasierten Korrosionsschutzbeschichtung für Stahlbleche oder Stahlbänder *für direkt pressformgehärtete Bauteile aus Stahl,* die zumindest bereichsweise auf eine Temperatur über Ac3 erhitzt werden und danach mit einer Geschwindigkeit abgekühlt werden, die zumindest bereichsweise oberhalb der kritischen. Härtegeschwindigkeit liegt,
**dadurch gekennzeichnet,**
**dass** eine Beschichtung, die mindestens 75 Gew.% Zink und gegebenenfalls vorhandenen unvermeidbaren Verunreinigungen *0,5 bis 5,0 Gew.% Mangan und 0,1 bis 2,0 Gew.% Aluminium* enthält, im Schmelztauchverfahren aufgebracht wird.

2. Verfahren nach Anspruch 1,
**dadurch gekennzeichnet,**
**dass** die Gehalte an Mangan 0,5 bis 3,0 Gew.% und die Gehalte an Aluminium 0,1 bis 1,0 Gew.% betragen.

3. Verfahren nach einem der Ansprüche 1 bis 2,
**dadurch gekennzeichnet,**
**dass** die Beschichtung durch eine unmittelbare Erwärmung nach Verlassen des Schmelzbades in eine Zink-Mangan-Aluminium-Eisen-Legierungsschicht *umwandelbar ist.*

4. Verfahren nach einem der Ansprüche 1 bis 3,
**dadurch gekennzeichnet,**
**dass** die Beschichtung oder die Legierungsschicht eine Dicke zwischen 1 und 25 Mikrometer aufweist.

5. Zumindest bereichsweise pressformgehärtetes Bauteil mit einer Korrosionsschutzbeschichtung nach einem der Ansprüche 1 bis 4.

6. Verwendung einer zinkbasierten Korrosionsschutzbeschichtung *mit 0,5 bis 5,0 Gew.* % *Mangan und 0,1 bis 2,0 Gew.% Aluminium* für Stahlprodukte, die bei Temperaturen oberhalb von 500 °C umgeformt werden.

7. Verwendung einer Korrosionsschutzbeschichtung nach Anspruch 6 für Pflugscharen, Grobbleche oder Walzprofile.

## Claims

1. Method for producing a zinc-based corrosion protection coating for steel sheets or steel strips *for directly press-hardened components made of steel,* which are heated at least in some regions to a temperature above Ac3 and then cooled at a speed which is at least in some regions above the critical hardening speed,
**characterised in that**
a coating which contains at least 75 wt.% zinc and any inevitable impurities *0.5 to 5.0 wt.% manganese and 0. 1 to 2.0 wt.% aluminium* is applied in the hot-dip process.

2. Method according to claim 1,
**characterised in that**
the manganese content is 0.5 to 3.0 wt.% and the aluminium content is 0.1 to 1.0 wt.%.

3. Method according to any of claims 1 to 2,
**characterised in that**
the coating *can be converted* by direct heating, after leaving the melt bath, into a zinc-manganese-aluminium-iron alloy layer.

4. Method according to any of claims 1 to 3,
**characterised in that**
the coating or the alloy layer has a thickness between 1 and 25 micrometres.

5. Component, press-hardened at least in some regions, having a corrosion protection coating according to any of claims 1 to 4.

6. Use of a zinc-based corrosion protection coating *with 0.5 to 5.0 wt.% manganese and 0.1 to 2.0 wt.% aluminium* for steel products that are formed at temperatures above 500°C.

7. Use of a corrosion protection coating according to claim 6 for ploughshares, heavy plates or rolled profiles.

## Revendications

1. Procédé de fabrication d'un revêtement anticorrosion à base de zinc pour des tôles d'acier ou des bandes d'acier, pour des pièces en acier ayant subi un durcissement direct en moule, qui sont chauffées au moins en zones à une température supérieure à Ac3, et sont ensuite refroidies à une vitesse qui au moins en zones est supérieure à la vitesse critique de durcissement, **caractérisé en ce qu'**un revêtement est appliqué qui contient au moins 75 % en poids de zinc et des impuretés inévitables éventuellement présentes de 0,5 à 5,0% en poids de manganèse et 0,1 à 2,0% en poids d'aluminium par un processus d'immersion à chaud.

2. Procédé selon la revendication 1, **caractérisé en ce que** les teneurs en manganèse sont de 0,5 à 3,0 % en poids et les teneurs en aluminium sont de 0,1 à 1,0 % en poids.

3. Procédé selon l'une des revendications 1 à 2, **caractérisé en ce que** le revêtement peut être converti, par un chauffage immédiat après avoir quitté le bain de fusion, en une couche d'un alliage zinc-manganèse-aluminium-fer.

4. Procédé selon l'une des revendications 1 à 3, **caractérisé en ce que** le revêtement ou la couche d'alliage présente une épaisseur comprise entre 1 et 25 micromètres.

5. Pièce ayant au moins par zones subi un durcissement en moule, comportant un revêtement anticorrosion, selon l'une des revendications 1 à 4.

6. Utilisation d'un revêtement anticorrosion à base de zinc, contenant 0,5 à 5,0 % en poids de manganèse et 0,1 à 2,0 % en poids d'aluminium pour des produits d'acier qui sont façonnés à des températures supérieures à 500 °C.

7. Utilisation d'un revêtement anticorrosion selon la revendication 6 pour des socs de charrue, des tôles fortes ou des profilés laminés.
